Europäisches Patentamt

European Patent Office

Office européen des brevets

(11) Veröffentlichungsnummer : **0 038 420**
**B1**

(12) **EUROPÄISCHE PATENTSCHRIFT**

(45) Veröffentlichungstag der Patentschrift :
26.01.83

(21) Anmeldenummer : 81101859.7

(22) Anmeldetag : 13.03.81

(51) Int. Cl.³ : **C 02 F 11/10, C 02 F 11/12,**
**C 10 B 53/00**

(54) Verfahren und Anlage zum Veraschen von Klärschlamm.

(30) Priorität : 21.04.80 DE 3015290

(43) Veröffentlichungstag der Anmeldung :
28.10.81 Patentblatt 81/43

(45) Bekanntmachung des Hinweises auf die Patenterteilung : 26.01.83 Patentblatt 83/04

(84) Benannte Vertragsstaaten :
AT BE CH DE FR LI NL SE

(56) Entgegenhaltungen :
AT B 266 723
CH A 499 750
DE A 2 142 439

(73) Patentinhaber : **Werner & Pfleiderer**
**Theodorstrasse 10 Postfach 30 12 20**
**D-7000 Stuttgart 30 (DE)**

(72) Erfinder : **Hinger, Klaus-Jürgen, Dr.-Ing.**
**Im Unteren Kienle 12**
**D-7000 Stuttgart 1 (DE)**

(74) Vertreter : **Rau, Manfred, Dr. Dipl.-Ing. et al**
**Postfach 91 04 80 Lange Zeile 30**
**D-8500 Nürnberg 91 (DE)**

## Verfahren und Anlage zum Veraschen von Klärschlamm

Die Erfindung betrifft ein Verfahren zum Veraschen von Klärschlamm nach dem Oberbegriff des Anspruches 1 und eine Anlage zur Durchführung dieses Verfahrens nach dem Oberbegriff des Anspruches 5.

Es ist bekannt, Klärschlamm zu verbrennen. Hierbei gehen bei hohen Verbrennungstemperaturen von 700 bis 900 °C (973 bis 1 173 K) giftige Schwermetalle aus dem Klärschlamm in die Gasphase über und werden als Schwermetalloxide in extrem giftiger Form an die Atmosphäre abgegeben. Weiterhin wird für eine thermische Nachverbrennung der Rauchgase sehr viel zusätzliche Energie benötigt. Bei einer Schlammverbrennung in Wirbelschichtöfen mit Nachbrennkammer läßt sich die Abhitze der stark mit Flugasche beladenen Rauchgase nicht problemlos nutzen. Hier eingesetzte Wassereinspritzkühler absorbieren einen erheblichen Teil der verfügbaren Energie. Die Reinigung von großen Rauchgasmengen, die 20 bis 40 % Wasserdampf enthalten, ist außerordentlich teuer.

Aus der CH-A 478 216 ist es bekannt, Klärschlamm zunächst luftzutrocknen und ihn anschließend in einem von außen beheizten Retortenofen auf mindestens 900 bis 1 200 °C (1 173 bis 1 473 K) zu erhitzen. Hierbei wird der Klärschlamm zu einem wesentlichen Teil vergast. Das Rohgas wird in einem Trockenreiniger gefiltert. Das heiße gereinigte Gas wird in einem Wärmetauscher zur Gewinnung von Dampf gekühlt, und das gekühlte Gas steht dann als Heizgas zur Verfügung.

Aus der DE-A-21 42 439 ist ein Verfahren zum Vortrocknen und Verbrennen von Klärschlamm bekannt, bei dem der nicht vorgetrocknete Klärschlamm im Gleichstrom mit aus einem Verbrennungsabschnitt stammenden Rauchgasen durch einen Trocknungsabschnitt geführt wird. Anschliessend wird der vorgetrocknete Schlamm in einem Verbrennungsabschnitt verbrannt. Durch die Gleichstromführung im Trocknungsabschnitt soll sichergestellt werden, daß der Schlamm im Trocknungsabschnitt noch nicht zu brennen beginnt. Eine Pyrolysierung des getrockneten Schlamms ist nicht vorgesehen ; dieses bekannte Verfahren ist daher nicht umweltfreundlich und auch nicht energiesparend und kostengünstig.

Aus der AT-B-266 723 ist es bekannt, Abwasserschlamm mit einem saugfähigen Trägermaterial, z.B. Sägemehl oder Torf, zu mischen und einem Trommeltrockner zuzuführen, dem von einem Verbrennungsofen Rauchgase zugeführt werden, die zusammen mit dem Schlamm den Trockner im Gleichstrom durchströmen. Die Rauchgase, der Dampf und der getrocknete Schlamm werden in einem Abscheider voneinander getrennt. Das getrocknete Gemisch aus Trockenschlamm, Staub und Trägermaterial wird auf einem Vibrationssieb getrennt. Der abgetrennte Trockenschlamm wird anschließend entweder in Säcke abgefüllt oder aber dem Verbrennungsofen als Brennmaterial zugeführt. Der Verbrennungsofen wird ansonsten mit Öl beheizt. Eine Pyrolyse des Schlamms ist nicht vorgesehen. Das Verfahren ist nicht kostengünstig und nicht energiesparend.

Aus der CH-A-499 750 ist ein Verfahren zum Beseitigen von Abwasserschlamm durch Verbrennung bekannt, bei dem der durch mehrfaches Zentrifugieren leicht entwässerte Schlamm einem Drehrohrofen zugeführt wird. In diesem durchläuft der Schlamm zuerst eine Trocknungszone und dann eine Verbrennungszone, der Verbrennungsluft zugeführt wird und in der die Verbrennung durch einen Ölbrenner aufrechterhalten wird. Die beim Ausbrennen des Schlamms auftretenden Rauchgase durchströmen den Trocknungsabschnitt im Gegenstrom. Dies ergibt eine besonders ungünstige und wenig energiesparende Trocknung.

Aus der DE-B-24 32 504 sind ein Verfahren und eine Anlage zum Herstellen von brennbaren Gasen aus stückigem Haus- und Industriemüll bekannt. Die stückigen Abfälle werden hierbei in einer ersten Verfahrensstufe durch indirekte Beheizung unter Luftabschluß bei Temperaturen zwischen 300 und 600 °C (573 und 873 K) verschwelt. Die Schwelgase werden in einer gesonderten zweiten Verfahrensstufe unter Zufuhr von durch die erzeugten heißen Brenngase vorgewärmter Luft und in der ersten Verfahrensstufe anfallendem Schwelkoks bei Temperaturen zwischen 1 000 und 1 200 °C (1 273 und 1 473 K) in Brenngase zerlegt. Wesentlich hierbei ist die Wertstoffrückgewinnung aus den stückigen Abfällen in der zweiten Verfahrensstufe. Die erste Verfahrensstufe wird in Drehtrommeln durchgeführt. Für die Veraschung von reinem Klärschlamm ohne Hausmüll ist dieses Verfahren und diese Vorrichtung nicht geeignet.

Aus der DE-B-22 22 267 ist es bekannt, hochpolymere feste Abfallstoffe, wie Polyäthylen, Polypropylen und dgl. durch Wärme und spätere Kühlung der erzeugten Gase in gasförmige und flüssige Brennstoffe zu zerlegen. Hierbei werden in einem beheizten Extruder die Abfallstoffe in einer ersten Zone durch Heizen und Komprimieren geschmolzen, in einer zweiten Zone höher beheizt und teilweise zersetzt und in einer dritten Zone unter Überhitzung bei gleichzeitigem Unterdruck vergast. Für eine Veraschung von Klärschlamm ist dieses Verfahren nicht geeignet.

Aus VDI-Nachrichten, Nr. 43 vom 26.10.1979 ist es bekannt, Klärschlamm in einem Trommeltrockner zu trocknen und anschließend als Dünger einzusetzen. Dieses Verfahren ist sehr energieaufwendig.

Der Erfindung liegt die Aufgabe zugrunde, ein Verfahren der gattungsgemäßen Art zu schaffen, mittels dessen eine umweltfreundliche, energiesparende und kostengünstige Veraschung von Klärschlamm möglich ist und eine Anlage zur Durchführung des Verfahrens anzugeben.

Diese Aufgabe wird erfindungsgemäß bei einem gattungsgemäßen Verfahren mit den kennzeichnenden Merkmalen des Anspruches 1 gelöst. Durch die erfindungsgemäßen Verfahrensschritte wird erreicht, daß der Klärschlamm zu Beginn des Eindampfprozesses mit Rauchgasen besonders hoher Temperatur, also mit Wärme hoher Temperaturdifferenz beaufschlagt wird. Hierdurch wird eine sehr schnelle Aufheizung des Klärschlamms bis zur Verdampfungstemperatur der in ihm enthaltenen Feuchtigkeit, insbesondere also des in ihm enthaltenen Wassers, bewirkt. Anschließend erfolgt das Eindampfen, also Trocknen des Klärschlammes bis auf eine Restfeuchtigkeit von weniger als 20 Gew.-% bezogen auf das Gesamtgewicht. Durch diese Temperaturführung in der ersten Behandlungsstufe wird mit Sicherheit ausgeschlossen, daß bereits eine Pyrolysierung des Klärschlammes stattfindet. Aufgrund der hohen Temperaturdifferenz am Anfang der ersten Behandlungsstufe erfolgt hier bei der vorhandenen hohen Feuchtigkeit ein schnelles Verdampfen, während gegen Ende der ersten Behandlungsstufe bei geringer werdender Temperaturdifferenz zwischen Klärschlamm und Rauchgasen die Restfeuchte langsamer ausgetrieben wird. Da in der zweiten Behandlungsstufe der bis auf eine Restfeuchte von weniger als 20 Gew.-% bezogen auf das Gesamtgewicht getrocknete Klärschlamm im Gegenstrom zu denselben Rauchgasen geführt wird, wird er kontinuierlich weitererhitzt und wegen des gleichzeitigen Luftabschlusses pyrolysiert. Diese steigende Temperaturdifferenz zwischen Rauchgasen und Klärschlamm während des Pyrolyseprozesses ist verfahrenstechnisch optimal.

Durch die Maßnahmen nach dem Anspruch 2 wird erreicht, daß optimale Wärmeübergangsverhältnisse zum einen im Hinblick auf die erste Behandlungsstufe und zum anderen im Hinblick auf die zweite Behandlungsstufe erreicht werden, wobei gleichzeitig die Wärmeverluste der Rauchgase minimiert werden. Besonders gute Wärmeübergangsverhältnisse auf den zu trocknenden Klärschlamm und auf den zu pyrolysierenden Klärschlamm werden durch die Maßnahmen nach dem Anspruch 3 erreicht. Anspruch 4 gibt hierzu optimale Angaben an.

Durch die Maßnahmen nach dem Anspruch 5 wird eine besonders einfache und damit kostengünstige Anlage zur Durchführung des Verfahrens geschaffen. Durch die Führung der Rauchgase in dem Heizkanal zwischen der Schneckenwelle und dem Pyrolyse-Drehrohrreaktor wird sichergestellt, daß die Wärme von innen auf den zu trocknenden Klärschlamm übertragen wird und erst von dem Klärschlamm wiederum auf die Innenwand des Gehäuses der Schneckenmaschine übertragen wird. Hierdurch wird sichergestellt, daß die Temperatur an der Schneckenwelle höher ist als an der Innenwand des Gehäuses. Dies führt wiederum dazu, daß eine zuverlässige Förderung des Klärschlamms in der ersten Behandlungsstufe erreicht wird.

Durch die Maßnahmen nach dem Anspruch 6 wird erreicht, daß sich in dem Kanal immer pulverförmiger Klärschlamm befindet, so daß eine ausreichende gasdichte Trennung zwischen der Eindampfzone einerseits und der Pyrolysezone andererseits gegeben ist. Durch die Maßnahmen nach dem Anspruch 7 wird erreicht, daß die Verweilzeit des Klärschlamms in der Eindampfzone einerseits und der Pyrolysezone andererseits äußerst unterschiedlich eingestellt und damit jeweils für sich optimiert werden können. Die Eindampfzeit beträgt beispielsweise etwa 10 bis 20 Minuten, während die Verweilzeit des Klärschlamms in dem Drehrohrreaktor zwischen 0,5 und 6 Stunden betragen kann. Die Ansprüche 8 und 9 geben hierzu konstruktiv vorteilhafte Ausgestaltungen wieder.

Weitere Vorteile und Merkmale der Erfindung ergeben sich aus den weiteren Unteransprüchen und der nachfolgenden Beschreibung eines Ausführungsbeispiels anhand der Zeichnung. In der Zeichnung zeigt

Figur 1 eine Anlage gemäß der Erfindung im Aufriß und

Figur 2 einen Querschnitt gemäß der Schnittlinie II-II in Fig. 1.

Das Kernstück der in der Zeichnung dargestellten Klärschlamm-Veraschungsanlage ist eine einwellige Eindampf-Schneckenmaschine 1 mit einem integrierten Pyrolyse-Drehrohrreaktor 2. Die Eindampf-Schneckenmaschine 1 weist ein in üblicher Weise horizontal geteiltes Gehäuse 3 auf, das mittels im Bereich seiner beiden Enden angeordneten Maschinenfüßen 4, 5 gegen den Boden bzw. ein Fundament 6 abgestützt ist. Ein Maschinenfuß 5 ist unter Zwischenschaltung einer Höhenverstelleinrichtung 7 gegenüber dem Fundament 6 abgestützt, so daß die Neigung der gesamten Schneckenmaschine 1 gegenüber der Horizontalen verändert werden kann.

Innerhalb des hohlzylindrischen Gehäuses 3 und koaxial zu dessen Mittel-Achse 8 ist eine ebenfalls hohlzylindrisch bzw. ringzylindrisch ausgebildete Schneckenwelle 9 angeordnet, die in hochtemperaturfesten Rollenlagern 10, 11 im Bereich der beiden Enden des Gehäuses 3 gegenüber diesem abgestützt und gelagert ist. Diesen Rollenlagern 10, 11 sind ebenfalls hochtemperaturfeste Dichtungen 12, 13 zugeordnet, bei denen es sich beispielsweise um allgemein bekannte berührungslose Lamellendichtungen handeln kann.

Die Schneckenwelle 9 ist mit mehreren, beim gewählten Ausführungsbeispiel 3, Schneckenwindungen 14 versehen, die sich mit ihrem Außenumfang — unter Freilassung eines geringfügigen Gangspieles — bis an die Innenwand 15 des Gehäuses 3 erstrecken. An einem Ende des Gehäuses 3 ist die Aufgabeseite 16 der Schneckenmaschine 1. Hier ist ein als Zwischenlager dienender Silo-Behälter 17 vorgesehen, von dem eine Einwellen-Austragsschnecke 18 in die Schneckenmaschine 1 führt.

An dem der Aufgabeseite 16 des Gehäuses 3 entgegengesetzten Ende ragt die Schneckenwelle 9 aus der zugeordneten Stirnseite des Gehäuses 3 hinaus. Sie ist hier mit einem Zahnkranz 19 drehfest versehen, der wiederum mit einem Antriebsritzel 20 eines elektrischen Antriebsmotors 21 im Eingriff ist. Der Antriebsmotor selbst ist mittels eines Lagerbockes 22 am Gehäuse 3 befestigt, so daß sich die Lage des Antriebsmotors 21 zur Schneckenwelle 9 und damit der Eingriff zwischen Antriebsritzel 20 und Zahnkranz 19 nicht ändert, wenn die Neigung des Gehäuses 3 mittels der Höhenverstelleinrichtung 7 geändert wird.

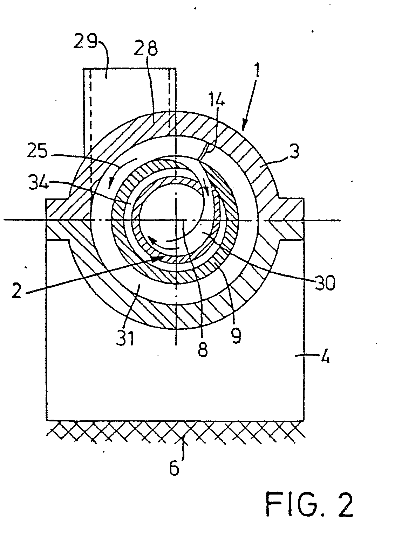

Der Antrieb der aus Schneckenwelle 9 mit Schneckenwindungen 14 bestehenden Schnecke 23 erfolgt in der Weise, daß aus dem Silo-Behälter 17 mittels der Austragsschnecke 18 aufgegebener mechanisch vorgetrockneter Klärschlamm entsprechend dem Förderrichtungspfeil 24 von der Aufgabeseite 16 her zum anderen Ende der Eindampf-Schneckenmaschine 1 hin gefördert wird. In Fig. 2 ist die entsprechende Drehrichtung 25 mit einem entsprechenden Drehrichtungspfeil gekennzeichnet.

Hinter der Aufgabeseite 16 befindet sich eine relativ kurze Einzugszone 26, an die sich eine Eindampfzone 27 anschließt. In dieser Eindampfzone 27 weist das Gehäuse 3 eine sich über die Länge der Eindampfzone 27 erstreckende Durchbrechung 28 auf, oberhalb derer ein domartiger Abzug 29 für Brüdendämpfe angeordnet ist. Die Durchbrechung 28 ist außermittig angebracht, und zwar in der Hälfte der Oberseite des Gehäuses 3, in der sich die Schneckenwindungen 14 wieder abwärtsbewegen, wie aus Fig. 2 hervorgeht. In diesem Bereich erfolgt jeweils aufs neue der Materialeinzug. Durch diese Anordnung der Durchbrechung 28 wird sichergestellt, daß der zu behandelnde Klärschlamm nicht durch die Durchbrechung 28 in den Abzug 29 nach außen gedrückt wird.

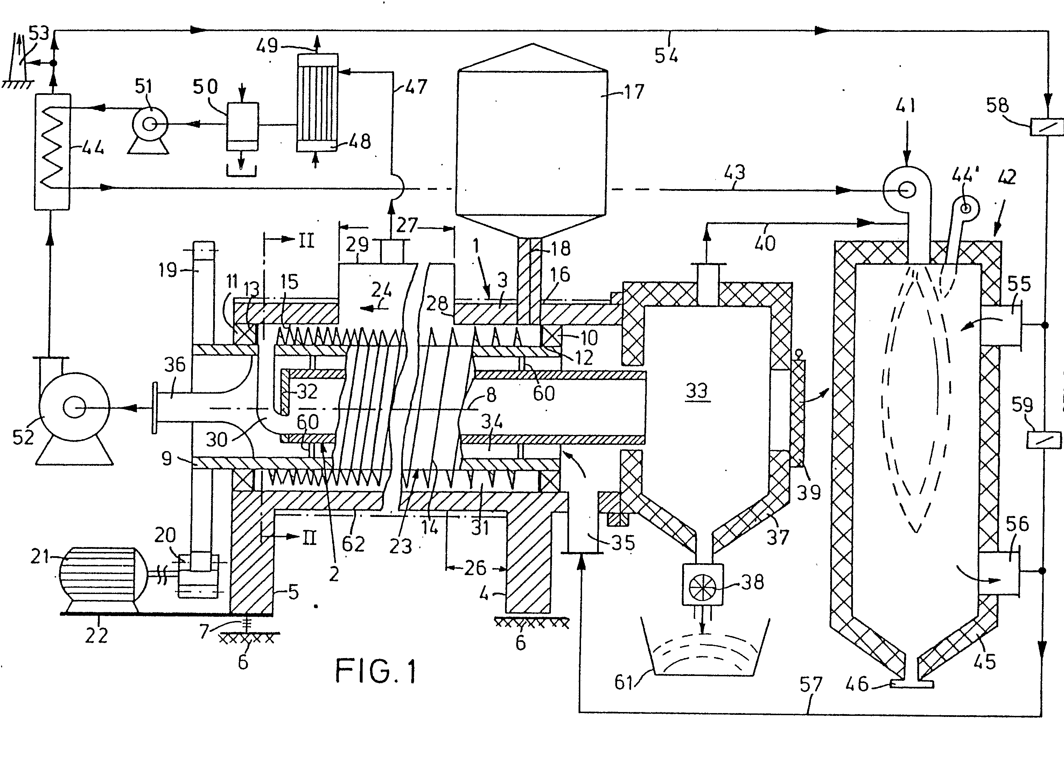

An dem der Aufgabeseite 16 entgegengesetzten Ende der Eindampf-Schneckenmaschine 1, in Förderrichtung 24 gesehen also hinter der Eindampfzone 27 führt ein Kanal 30 aus dem Förderraum 31 der Schneckenmaschine 1 in den Drehrohrreaktor 2. Wie aus Fig. 1 in Verbindung mit Fig. 2 hervorgeht, ist der Kanal 30 etwa spiralförmig ausgebildet und verläuft vom Förderraum 31 gegensinnig zur Drehrichtung 25 zur ansonsten verschlossenen Stirnseite 32 des Drehrohrreaktors 2. Durch den spiralförmigen oder schraubenlinienförmigen, sich über einen vollen Umfangswinkel erstreckenden Verlauf des Kanals 30 ist sichergestellt, daß dieser immer teilweise mit pulverförmigem Klärschlamm gefüllt ist, so daß eine ausreichende Abdichtung zwischen der Eindampfzone 27 einerseits und dem Drehrohrreaktor 2 andererseits gewährleistet ist.

Der Drehrohrreaktor endet an seinem anderen, der Aufgabeseite 16 der Schneckenmaschine 1 benachbarten Ende in einen Zyklon 33. Zwischen dem Drehrohrreaktor 2 und der Schneckenwelle 9 ist ein ringzylindrischer Heizkanal 34 ausgebildet, der sich über die volle Länge des Förderraums 31 erstreckt. Diesem Heizkanal werden heiße Rauchgase über einen Rauchgas-Zuführraum 35 zugeführt, der sich im Gehäuse 3 zwischen dem Zyklon 33 und den Rollenlagern 10 erstreckt, der also lediglich vom zugeordneten Ende des Drehrohrreaktors 2 durchsetzt wird.

Am entgegengesetzten Ende ist ein Rauchgas-Sammelraum 36 ausgebildet, der auch das dem Zahnkranz 19 zugeordnete stirnseitige Ende der Schneckenwelle 9 abschließt.

Der in üblicher Weise als Zyklon 33 ausgebildete Staubabscheider ist an das Gehäuse 3 angeflanscht. An seinem trichterförmigen Boden 37 befindet sich eine Zellenrad-Austragsvorrichtung 38. An einer Seitenwand ist eine Reinigungstür 39 angebracht, die auch als Explosionsschutzvorrichtung dient. Aus der Oberseite mündet eine Pyrolysegas-Leitung 40 aus, die zu einem Pyrolysegas-Brenner 41 in einer Brennkammer 42 führt. Diesem Brenner 41 wird erhitzte Verbrennungsluft über eine Heißluft-Leitung 43 von einem Luftvorwärmer 44 zugeführt. Dem Pyrolysegas-Brenner 41 ist ein Stützbrenner 44' benachbart. Am Boden 45 der Brennkammer 42 ist eine Asche-Abzugsöffnung 46 vorgesehen.

Aus dem Abzug 29 der Eindampfzone 27 führt eine Brüden-Dampfleitung 47 zu einem Kondensator 48, der mit einem Wärmeträger beaufschlagt wird, der einem anderen Wärmekreislauf 49 zugehört, der lediglich durch Flußrichtungspfeile gekennzeichnet ist. Aus den abgekühlten Brüdendämpfen wird in einem Flüssigkeitsabscheider 50 das aus Wasser und schwer flüchtigen Bestandteilen bestehende Kondensat abgezogen. Die verbleibenden nicht kondensierbaren Gase werden zusammen mit Frischluft mittels eines Gebläses 51 durch den Luftvorwärmer 44 gedrückt, von wo sie als Heißluft durch die Leitung 43 dem Brenner 41 zugeführt werden. Die Vorwärmung der Luft im Luftvorwärmer 44 erfolgt mittels der aus dem Rauchgas-Sammelraum 36 mittels eines Rauchgas-Gebläses 52 abgezogenen Rauchgase, die im Kreuz-Gegen-Strom durch den Luftvorwärmer 44 geführt werden und hier einen Teil ihrer Wärme auf die Luft übertragen. Hinter dem Luftvorwärmer wird ein Teil der Rauchgase über einen Kamin 53 an die Atmosphäre abgegeben, während ein anderer Teil über eine Rauchgas-Rückführleitung 54 entweder über eine Einlaßöffnung 55 in die Brennkammer 42 oder hinter der Rauchgas-Austrittsseite 56 der Brennkammer 42 direkt in die zum Rauchgas-Zuführraum 35 führende Rauchgas-Leitung 57 eingespeist wird. Vor der Einlaß-Öffnung 55 ist in der Rauchgas-Rückführleitung 54 ein Ventil 58 angeordnet, durch das die Gesamtmenge der Rauchgase bestimmt wird, die der Brennkammer 42 direkt und den aus ihr austretenden Rauchgasen zugeführt werden. Die Aufteilung dieser Rauchgasmenge erfolgt mittels eines Ventils 59, das in der Rauchgas-Rückführleitung 54 zwischen der Einlaß-Öffnung 55 und der Rauchgas-Austrittsseite 56 der Brennkammer 42 vorgesehen ist. Beide Ventile 58, 59 sind zweckmäßigerweise als Magnetventile ausgebildet, die in Abhängigkeit von den Temperaturen in der Brennkammer 42 und an der Rauchgas-Austrittsseite 56 angesteuert werden.

Die zuvor beschriebene Klärschlamm-Veraschungsanlage arbeitet wie folgt: In einer mechanischen Entwässerungsvorrichtung, z.B. einer Filterpresse oder einer Siebbandpresse vorgetrockneter Klärschlamm in Form von Filterkuchen mit einem Trockensubstanz-Anteil von 35 bis 45 Gew.-%, bezogen auf das Gesamtgewicht, Rest im wesentlichen Wasser, wird in dem Silo-Behälter 17 zwischengelagert und aus diesem mittels der Austragsschnecke 18 der Eindampf-Schneckenmaschine 1 zugeführt und durch diese in Richtung 24 hindurchgefördert. Der Klärschlamm wird während dieser Förderung vom Heizkanal 34 aus erhitzt, durch den Rauchgase mit hoher Geschwindigkeit geführt werden, die im Rauchgas-Zuführraum 35 eine Ausgangstemperatur von 700 °C (973 K) aufweisen. Dadurch, daß der Klärschlamm nur von der Schneckenwelle 9 her mit einer Oberflächentemperatur der Schneckenwelle von über 180 °C (453 K) geheizt wird, während das Gehäuse 3 ungeheizt ist, wird sichergestellt, daß eine ordnungsgemäße Förderung erfolgt. Dadurch, daß der Klärschlamm von der Schnecke 23 im Gleichstrom mit den Rauchgasen im Heizkanal 34 geführt werden, erfolgt das Aufheizen des Klärschlammes bis auf die gewünschte Verdampfungstemperatur sehr schnell über eine verhältnismäßig kurze Strecke der Schnecke 23. Im Bereich der Einzugszone 26 ist ja die Temperaturdifferenz zwischen Rauchgasen und Klärschlamm am größten. Aufgrund der in der Eindampfzone 27 benötigten Verdampfungswärme erhöht sich die Temperatur des Klärschlammes über diesen gesamten Längenbereich der Schneckenmaschine 1 nur wenig. Andererseits nimmt die Temperatur der Rauchgase ab.

Am Ende des Förderraums 31, also vor dem Übertritt des Klärschlamms in den Kanal 30, hat der Klärschlamm eine Temperatur zwischen 180 und 240 °C (453 K bis 513 K). Durch diese Temperaturführung in der Eindampfzone 27 ist sichergestellt, daß nicht bereits eine Pyrolyse, d.h. eine Verschwelung des Klärschlammes in der Eindampf-Schneckenmaschine erfolgt.

Der Klärschlamm weist vor dem Übertritt in den Kanal 30 eine schollenförmige bis pulvrige Konsistenz auf und hat weniger als 20 % Restwasseranteil.

Der auf über 80 % Trockensubstanzanteil eingedampfte und weitgehend zu Pulver zerfallene Klärschlamm fällt am Ende des Förderraums 31 in den Kanal 30 und fließt durch diesen in den Pyrolyse-Drehrohrreaktor, der durch den pulverförmigen Klärschlamm ausreichend dicht gegenüber der Eindampfzone 27 abgedichtet wird. Durch die Rotation des Drehrohr-Reaktors 2, der mittels Abstandshalter 60 drehfest und koaxial in der Schneckenwelle 9 gehalten ist, und aufgrund der einstellbaren Neigung des Längsachse 8 zur Horizontalen bewegt sich das Klärschlammpulver mit einer Verweilzeit zwischen 0,5 und 6 Stunden durch den Drehrohrreaktor 2. Aufgrund der Gegenstromführung des Klärschlamms im Drehrohrreaktor 2 relativ zu den den Heizkanal 34 durchströmenden Rauchgasen wird der Klärschlamm im Drehrohrreaktor 2 ausgehend von der Eintrittstemperatur von 180 bis 240 °C auf 400 bis 600 °C (673 K bis 873 K) unter Luftabschluß aufgeheizt und pyrolysiert (verschwelt) hierbei vollständig. Die freiwerdenden Pyrolysegase werden im Zyklon 33 weitgehend von staubförmigen Bestandteilen getrennt. Diese und der aus dem Drehrohrreaktor nach der Pyrolyse austretende Pyrolysekoks werden aus dem Zyklon 33 über die Zellenrad-Austragsvorrichtung 38 ausgetragen und mittels eines entsprechenden Asche-Behälters 61 einer Deponie zugeführt, oder wegen seiner besonderen Eigenschaften als hydraulischer Binder zur Schlammkonditionierung oder Abwasserreinigung weiter verwertet.

Die Pyrolysegase werden mit einer Temperatur von 400 bis 500 °C (673 bis 773 K) dem Pyrolysegas-Brenner 42 zugeführt und dort zusammen mit der über die Heißluft-Leitung mit einer Temperatur von ca. 200 °C (473 K) zugeführten Verbrennungsluft verbrannt.

Dieses Pyrolysegas wird vollständig zu $CO_2$ und $H_2O$ verbrannt. Um eine optimale Verbrennung in der Brennkammer 42 zu gewährleisten, wird das Brennkammervolumen so groß gewählt, daß die Gase eine Verweilzeit von wenigen Sekunden in der Brennkammer 42 haben. Des weiteren wird die Verbrennungstemperatur durch Zumischen der weitgehend kalten Rauchgase, die durch die Rauchgas-Rückführleitung 54 in die Einlaß-Öffnung 55 eingespeist werden, auf 800 bis 900 °C (1 073 bis 1 173 K) eingestellt, um die Bildung von Schadstoffen zu vermeiden.

Die aus der Brennkammer 42 mit einer Temperatur von 800 bis 900 °C austretenden Rauchgase werden durch Zugabe der kalten Rauchgase hinter der Rauchgas-Austrittsseite 56 auf eine Temperatur von ca. 700 °C (973 K) eingestellt. Mit dieser Temperatur werden die Rauchgase dem Rauchgas-Zuführraum 35 zugeführt.

Die im Kondensator 48 durch Kühlung des Brüden-Dampfes gewonnene Wärme wird in dem Wärmekreislauf 49 beispielsweise verwendet zur Erzeugung von Warmwasser, zur Beheizung von Betriebsräumen im Winter, zur Erwärmung eines Faulturmes, zur Erwärmung von Frigendampf für einen Arbeitsprozeß oder zur Eindampfung von Zentrifugenschlamm unter Vakuum von ca. 25 % auf ca. 40 % Trockensubstanz, der dann direkt der Eindampf-Schneckenmaschine 1 zugeführt werden kann.

Das Gehäuse 3 der Eindampf-Schneckenmaschine 1 ist zweckmäßigerweise mit einer in Fig. 1 nur gestrichelt angedeuteten Isolierung 62 versehen, um die Wärmeverluste zu minimieren.

Weiterhin kann — wie in Fig. 1 angedeutet — die Schnecke 23 so ausgebildet sein, daß sie in ihrem Endbereich ein eingängiges Profil aufweist, während der übrige Bereich von der Einzugszone 26 an von einem dreigängigen auf ein zweigängiges Profil wechselt. Mit anderen Worten heißt dies, daß von drei Schneckenwindungen 14 in der Einzugszone 26 ein Übergang auf nur eine Schneckenwindung 14 im Endbereich erfolgt, wie auch in Fig. 2 dargestellt ist. Alternativ kann die Schnecke 23 auch durchgehend eingängig ausgebildet sein ; sie hat dann jedoch in Förderrichtung eine stetig abnehmende Gangsteigung. In beiden Fällen wird hierdurch ein über die Schneckenläge etwa gleichbleibendes Füllvolumen erreicht, wie es für in der Kunststofftechnik eingesetzte Extruder bekannt ist.

## Ansprüche

1. Verfahren zum Veraschen von Klärschlamm, wobei vorgetrockneter Klärschlamm in einer ersten Behandlungsstufe unter Wärmezufuhr bis auf Restfeuchtigkeit getrocknet und anschließend in einer zweiten Behandlungsstufe unter weiterer Wärmezufuhr und unter Luftabschluß pyrolysiert wird, und wobei das gewonnene Pyrolysegas zumindest teilweise zur Erzeugung der für die Wärmezufuhr erforderlichen heißen Rauchgase eingesetzt wird, dadurch gekennzeichnet, daß der vorgetrocknete Klärschlamm in der ersten Behandlungstufe im Gleichstrom mit den heißen Rauchgasen geführt wird und daß der bis auf Restfeuchte getrocknete Klärschlamm in der zweiten Behandlungsstufe im Gegenstrom zu denselben Rauchgasen geführt wird.

2. Verfahren nach Anspruch 1, dadurch gekennzeichnet, daß der Klärschlamm in der ersten Behandlungsstufe die Rauchgase umhüllend geführt wird und daß er in der zweiten Behandlungsstufe von den Rauchgasen eingehüllt geführt wird.

3. Verfahren nach Anspruch 1 oder 2, dadurch gekennzeichnet, daß die Rauchgase mit hoher Geschwindigkeit geführt werden.

4. Verfahren nach Anspruch 3, dadurch gekennzeichnet, daß die Rauchgase mit einer Geschwindigkeit von 20 bis 50 m/s geführt werden.

5. Anlage zur Durchführung des Verfahrens nach einem der Ansprüche 1 bis 4, dadurch gekennzeichnet, daß die erste Behandlungsstufe als Eindampf-Schneckenmaschine (1) mit einer in einem Gehäuse (3) angeordneten, drehantreibbaren Schneckenwelle (9) mit mindestens einer Schneckenwindung (14) ausgebildet ist, daß als zweite Behandlungsstufe in der hohl ausgebildeten Schneckenwelle (9) ein Pyrolyse-Drehrohrreaktor (2) mit zur Förderrichtung (24) der Schneckenmaschine (1) gegensinniger Förderrichtung angeordnet ist, daß der Förderraum (31) der Schneckenmaschine (1) mit dem Drehrohrreaktor (2) über einen Kanal (30) verbunden ist und daß zwischen der Schneckenwelle (9) und dem Drehrohrreaktor (2) ein Heizkanal (34) für die Rauchgase ausgebildet ist.

6. Anlage nach Anspruch 5, dadurch gekennzeichnet, daß der Kanal (30) spiralförmig oder schraubenförmig verläuft.

7. Anlage nach Anspruch 5 oder 6, dadurch gekennzeichnet, daß der Drehrohrreaktor (2) gegenüber der Horizontalen neigungsverstellbar ausgebildet ist.

8. Anlage nach einem der Ansprüche 5 bis 7, dadurch gekennzeichnet, daß der Drehrohrreaktor (2) konzentrisch in der Schneckenwelle (9) angebracht und drehfest mit dieser verbunden ist.

9. Anlage nach Anspruch 7 und 8, dadurch gekennzeichnnet, daß die Schneckenmaschine (1) neigungsverstellbar ausgebildet ist.

10. Anlage nach einem der Ansprüche 5 bis 9, dadurch gekennzeichnet, daß in der Schneckenmaschine (1) eine Eindampfzone (27) ausgebildet ist, der ein Kondensator (48) nachgeschaltet ist.

11. Anlage nach einem der Ansprüche 5 bis 10, dadurch gekennzeichnet, daß dem Drehrohrreaktor (2) ein Zyklon (33) direkt nachgeordnet ist.

12. Anlage nach Anspruch 11, dadurch gekennzeichnet, daß der Zyklon (33) über eine Pyrolysegas-Leitung (40) mit einem Pyrolysegas-Brenner (41) einer Brennkammer (42) verbunden ist, deren Rauchgas-Austrittsseite (56) wiederum mit einem dem Heizkanal (34) im Gehäuse (3) der Schneckenmaschine (1) vorgeordneten Rauchgas-Zuführraum über eine Rauchgasleitung (57) verbunden ist.

13. Anlage nach einem der Ansprüche 5 bis 12, dadurch gekennzeichnet, daß ein am Ende des Heizkanals (34) vorgesehener Rauchgas-Sammelraum (36) mit einem Luftvorwärmer (44) zur Vorwärmung der Verbrennungsluft für den Pyrolysegas-Brenner (41) verbunden ist.

14. Anlage nach Anspruch 13, dadurch gekennzeichnet, daß von dem Luftvorwärmer (44) eine Rauchgas-Rückführleitung (54) zur Brennkammer (42) geführt ist.

15. Anlage nach Anspruch 14, dadurch gekennzeichnet, daß die Rauchgas-Rückführleitung (54) hinter der Rauchgas-Austrittsseite (56) der Brennkammer (42) mit der Rauchgasleitung (57) verbunden ist.

## Claims

1. Process for incinerating sewage sludge, in which in a first treatment stage and accompanied by a supply of heat, predried sewage sludge is dried to a residual moisture content and is then pyrolyzed in a second treatment stage, accompanied by a further supply of heat and with exclusion of air and in which the pyrolysis gas obtained is at least partly used for producing the hot flue gases required for the supply of heat, characterized in that the predried sewage sludge is supplied to the first treatment stage in parallel flow with the hot flue gases and that the sewage sludge dried to the residual moisture content is supplied in the second treatment stage in counterflow to the same flue gases.

2. Process according to claim 1, characterized in that the sewage sludge in the first treatment stage is supplied enveloping the flue gases and that in the second treatment stage it is supplied enveloped by the flue gases.

3. Process according to claims 1 or 3, characterized in that the flue gases are supplied at a high speed.

4. Process according to claim 3, characterized in that the flue gases are supplied at a speed of 20 to 50 m/s.

5. Plant for performing the process according to one of the claims 1 to 4, characterized in that the first treatment stage is constructed as an evaporation worm machine (1) with a rotatable worm shaft (9) having at least one worm spiral (14) and arranged in a casing (3), that the second treatment stage is constituted by a pyrolysis rotary tubular reactor in the hollow worm shaft (9) with a feed direction opposite to the feed direction (24) of worm machine (1), that the feed chamber (31) of worm machine (1) is connected to the rotary tubular reactor (2) by means of a duct (30), and that between the worm shaft (9) and the rotary tubular reactor (2) is provided a flue (34) for the flue gases.

6. Plant according to claim 5, characterized in that the duct (30) is spiral or helical.

7. Plant according to claims 5 or 6, characterized in that the slope of the rotary tubular reactor (2) with respect to the horizontal is adjustable.

8. Plant according to one of the claims 5 to 7, characterized in that the rotary tubular reactor (2) is concentrically fitted in the worm shaft (9) and is joined in non-rotary manner thereto.

9. Plant according to claims 7 and 8, characterized in that the slope of the worm machine (1) is adjustable.

10. Plant according to one of the claims 5 to 9, characterized in that an evaporation zone (27) is formed in worm machine (1) and downstream thereof is connected a condenser (48).

11. Plant according to one of the claims 5 to 10, characterized in that a cyclone separator (33) is arranged directly downstream of the rotary tubular reactor (2).

12. Plant according to claim 11, characterized in that the cyclone separator (33) is connected by means of a pyrolysis gas line (40) to a pyrolysis gas burner (41) of a combustion chamber (42), whose flue gas outlet side (56) is in turn connected by means of a gas line (57) to a flue gas supply chamber positioned upstream of flue (34) in casing (3) of worm machine (1).

13. Plant according to one of the claims 5 to 12, characterized in that a flue gas collecting chamber (36) provided at the end of flue (34) is connected to an air preheater (44) for preheating the combustion air for the pyrolysis gas burner (41).

14. Plant according to claim 13, characterized in that a flue gas return line (54) leads from air preheater (44) to combusiton chamber (42).

15. Plant according to claim 14, characterized in that behing the flue gas outlet side (56) of combustion chamber (42) the flue gas return line (54) is connected to the flue gas line (57).

## Revendications

1. Procédé pour l'incinération de boues de clarification, dans lequel les boues pré-séchées sont séchées dans une première étape de traitement, avec apport de chaleur, jusqu'à ne conserver qu'une humidité résiduelle et sont ensuite pyrolysées dans une seconde étape de traitement, avec nouvel apport de chaleur et sans air, le gaz de pyrolyse étant, au moins en partie, mis en œuvre pour la production des fumées chaudes nécessaires pour l'apport de chaleur, procédé caractérisé en ce que les boues de clarification pré-séchées sont dirigées, dans la première étape de traitement, en courant parallèle avec les fumées chaudes, et que la boue séchée jusqu'à ne conserver qu'une humidité résiduelle est divisée dans la seconde étape de traitement, à contre-courant par rapport aux mêmes fumées.

2. Procédé suivant la revendication 1, caractérisé en ce que la boue de clarification passe, dans la première étape de traitement, en entourant les fumées, tandis que, dans la seconde étape de traitement, elle est entourée par les fumées.

3. Procédé suivant l'une des revendications 1 et 2, caractérisé en ce que les fumées passent avec une vitesse élevée.

4. Procédé suivant la revendication 23, caractérisé en ce que les fumées passent avec une vitesse de 20 jusqu'à 50 mètres/seconde.

5. Installation pour l'application du procédé suivant l'une quelconque des revendications 1 à 4, caractérisée en ce que la première étape de traitement est réalisée dans une machine à vis sans fin d'étuvage (1) pourvue d'un arbre de vis sans fin (9) entraîné en rotation, disposé dans un carter (3), pourvu d'au moins une spire (14) que, comme seconde étape de traitement, il est disposé un réacteur tubulaire rotatif (2) de pyrolyse, dans l'arbre de vis sans fin (9) qui est creux, où la direction de transport est en sens contraire de la direction de transport (24) de la machine à vis sans fin (1), l'espace de transport (31) de la machine (1) étant relié au réacteur tubulaire rotatif (2) par un canal (30), un canal de chauffage (34) des fumées étant prévu entre l'arbre de vis sans fin (9) et le réacteur tubulaire rotatif (2).

6. Installation suivant la revendication 5, caractérisée en ce que le canal (30) s'étend en forme de spirale ou d'hélice.

7. Installation suivant l'une des revendications 5 ou 6, caractérisée en ce que l'on peut régler l'inclinaison par rapport à l'horizontale du réacteur tubulaire rotatif (2).

8. Installation suivant l'une quelconque des revendications 5 à 7, caractérisée en ce que le réacteur tubulaire rotatif (2) est monté concentriquement à l'arbre de vis sans fin (9) et solidaire en rotation avec celui-ci.

9. Installation suivant l'une des revendications 7 et 8, caractérisée en ce que la machine à vis sans fin (1) est réglable en inclinaison.

10. Installation suivant l'une quelconque des revendications 5 à 9, caractérisée en ce que dans la machine à vis sans fin (1) il est constitué une zone d'étuvage (27) à la suite de laquelle est monté un condenseur (48).

11. Installation suivant l'une quelconque des revendications 5 à 10, caractérisée en ce que à la suite directe du réacteur tubulaire rotatif (2) est monté un cyclone (33).

12. Installation suivant la revendication 11, caractérisée en ce que le cyclone (33) est relié par une conduite de gaz de pyrolyse (40) avec un brûleur de gaz de pyrolyse (41) d'une chambre de brûleur (42) dont le côté sortie de fumées (56) est relié à son tour par une conduite de gaz de fumées (57), à une chambre d'amenée de fumées, disposée en amont du canal de chauffage (34) dans le carter (3) de la machine à vis sans fin (1).

13. Installation suivant l'une quelconque des revendications 5 à 12, caractérisée en ce que une chambre collectrice de gaz de fumées (36) prévue à l'extrémité du canal de chauffage (34) est reliée à un réchauffeur (44) de l'air de combustion destiné au brûleur de gaz de pyrolyse (41).

14. Installation suivant la revendication 13, caractérisée en ce que, à partir du réchauffeur d'air (44) une conduite de retour de fumées (54) s'étend vers la chambre de combustion (42).

15. Installation suivant la revendication 14, caractérisée en ce que la conduite de retour de fumées (54) est reliée à la suite du côté sortie de fumées (56) de la chambre de combustion (42) à la conduite de gaz de fumées (57).

0 038 420

FIG.1

FIG. 2